# EUROPEAN PATENT SPECIFICATION

(11) **EP 3 833 064 B1**
(45) Date of publication and mention of the grant of the patent: **20.07.2022**
(21) Application number: 19848491.7
(22) Date of filing: 07.08.2019
(51) Int. Cl.: H04W 4/40, H04W 72/04, H04W 72/12, H04W 76/14, H04L 47/24

(54) **METHOD AND APPARATUS FOR CONFIGURING SIDELINK TRANSMISSION RESOURCE**
VERFAHREN UND VORRICHTUNG ZUR KONFIGURATION EINER SIDELINK-ÜBERTRAGUNGSRESSOURCE
PROCÉDÉ ET APPAREIL DE CONFIGURATION DE RESSOURCES DE TRANSMISSION DE LIAISON LATÉRALE

(30) Priority: 09.08.2018 CN 201810900554
(43) Date of publication of application: 09.06.2021
(73) Proprietor: Huawei Technologies Co., Ltd., Longgang Shenzhen, Guangdong 518129 (CN)
(72) Inventor: YOU, Chunhua, Shenzhen, Guangdong 518129 (CN); FAN, Qiang, Shenzhen, Guangdong 518129 (CN); ZHUO, Yibin, Shenzhen, Guangdong 518129 (CN); WANG, Jun, Shenzhen, Guangdong 518129 (CN); LIU, Xing, Shenzhen, Guangdong 518129 (CN)
(74) Representative: Epping - Hermann - Fischer
(86) International application number: PCT/CN2019/099669
(87) International publication number: WO 2020/030017

(56) References cited:
- WO-A2-2017/171250
- CN-A- 107 734 545
- CN-A- 108 024 230
- CN-A- 108 271 209
- NOKIA ET AL: "Discussion on latency reduction for eV2X", 3GPP DRAFT; R1-1806998-NOKIA-LTE_EV2X-DISCUSSION ON LATENCY REDUCTION FOR EV2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Busan, Korea; 20180521 - 20180525 20 May 2018 (2018-05-20), XP051442196, Retrieved from the Internet: URL:http://www.3gpp.org/ftp/Meetings%5F3GP P%5FSYNC/RAN1/Docs/ [retrieved on 2018-05-20]
- HUAWEI ET AL: "Discussion on the Tx carrier selection for PC5 CA", 3GPP DRAFT; R2-1712751 DISCUSSION ON THE TX CARRIER SELECTION FOR PC5 CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Reno, USA; 20171127 - 20171201 17 November 2017 (2017-11-17), XP051371654, Retrieved from the Internet: URL:http://www.3gpp.org/ftp/tsg%5Fran/WG2% 5FRL2/TSGR2%5F100/Docs/ [retrieved on 2017-11-17]
- HUAWEI et al: "Comparison of different options regarding the new parameter for Tx carrier selection", 3GPP TSG-RAN WG2 Meeting #101bis R2-1806332, 20 April 2018 (2018-04-20), XP051435891,
- ZTE: "Discussion on remaining issues of carrier selection/reselection", 3GPP TSG-RAN WG2 Meeting #101bis R2-1804510, 6 April 2018 (2018-04-06), XP051415541,

## Description

### TECHNICAL FIELD

This application relates to the communications field, and in particular, to a sidelink transmission resource configuration method, apparatus, computer-readable storage medium, computer program product, and communication system.

### BACKGROUND

In a field of wireless communications, a terminal device may communicate with another terminal device through forwarding of a network device, or may directly communicate with another terminal device without using a network device. When a terminal device directly communicates with another terminal device without using a network device, a communications link between the two terminal devices may be referred to as a sidelink (sidelink), or a direct link. There are two transmission modes for a sidelink: a centralized scheduling transmission mode and a distributed transmission mode. In the centralized scheduling transmission mode, a transmit end may send data to a receive end based on a resource scheduled by a network device. In the distributed transmission mode, the network device may configure a resource pool for the transmit end by using system information block (system information block, SIB) or radio resource control (radio resource control, RRC) signaling, or a resource pool is preconfigured on the transmit end. In this way, the transmit end may autonomously select a resource from the configured or preconfigured resource pool for data sending.

A vehicle-to-everything (vehicle to X, V2X) communications system is a basis for implementing unmanned driving. In the V2X communications system, a vehicle, as a terminal device, may communicate with another terminal device by using a sidelink. Because data transmitted in the V2X communications system is related to life safety of a passenger, the data transmitted in the V2X communications system has a relatively high requirement on transmission reliability. A sidelink-based communication mode in the current technologies cannot meet the requirement of the V2X communications system on the data transmission reliability.

Document CN 107 734 545 A discloses a selection method of a service transmission path. The method comprises the following steps: a base station judges whether a PC5 port resource can be distributed for the UE at present according to a request when the user equipment UE requests PC5 port resource to the base station eNB, and a judgment result is notified to the UE by using a RRC dedicated message, wherein the RRC dedicated message carries the configuration information of a sending pool distributed for the UE when the judgment result is distributable; the UE determines a transmission path of the current to-be-sent V2V and/or V2P service according to the RRC dedicated message.

By using the selection method disclosed by the invention, the user equipment can determine the transmission path used by the V2V and V2P service. 3GPP document R1-1806998, "Discussion on latency reduction for eV2X" from Nokia, 3GPP TSG RAN WG1 Meeting #93, Busan, Korea, May 21th - 25th, 2018, proposes to confirm that the exact value of minimum (pre-)configurable T2min is 10ms, and that there is no modification to the resource selection mechanism defined in Rel-14 after T2 reduction. Mode 3 cannot support the lower latency requirements (e.g. 10ms). Based on current specification, if UE supports lower-latency V2X services, it has to use mode 4 for both lower- and normal-latency services, even though in some circumstances mode 3 is more preferred for normal-latency services. Further, it is proposed to enable UE to use mode 3 and mode 4 simultaneously.

### SUMMARY

This application provides a sidelink transmission resource configuration method and apparatus, computer-readable storage medium, computer program product, and communication system, to meet a requirement of a V2X communications system on data transmission reliability. The present invention is defined by the attached set of claims. Embodiments and aspects which are not covered by the invention should be considered as examples useful for understanding the invention.

According to a first aspect, this application provides a sidelink transmission resource configuration method, including: A terminal device determines a transmission requirement of first data, where the first data needs to be transmitted on a sidelink. When a first resource does not meet the transmission requirement of the first data, the terminal device sends request information to a network device, where the request information is used to request to configure a second resource, the first resource is a resource that is configured by using a broadcast message and that is used to transmit data on the sidelink, and the second resource is a resource that is configured by using a unicast message and that is used to transmit data on the sidelink. When a first resource meets the transmission requirement of the first data, the terminal device sends the first data by using the first resource.

The foregoing method may be performed by, for example, the terminal device. Each piece of sidelink data corresponds to one transmission requirement (for example, a reliability requirement). After obtaining the first data, the terminal device determines a transmission feature (for example, reliability) of the first resource, and determines, depending on whether reliability of the first resource meets a reliability requirement of the first data, whether to send the first data by using the first resource. When the reliability of the first resource does not meet the reliability requirement of the first data, the terminal device requests the network device to configure the second resource, where the second resource is a dedicated resource configured by using a unicast message, so that a requirement of a V2X communications system on data transmission reliability and/or a delay feature can be met. When the reliability of the first resource meets the reliability requirement of the first data, the terminal device directly sends the first data by using the first resource, and does not need further to request the network device to configure the second resource. Therefore, a transmission delay can be reduced while the requirement of the V2X communications system on the data transmission reliability is met. That a terminal device obtains a transmission requirement of first data includes: The terminal device receives configuration information from the network device, where the configuration information is used to configure a correspondence between a service type of data and a channel busy ratio CBR threshold; and the terminal device determines, based on the correspondence and a service type of the first data, a CBR threshold corresponding to the first data, where the CBR threshold corresponding to the first data is the transmission requirement of the first data. The method further includes: when a CBR of the first resource does not meet the CBR threshold corresponding to the first data, determining that the first resource does not meet the transmission requirement of the first data.

The terminal device may obtain the correspondence between a service type of data and a CBR threshold in advance by using the configuration information, so that the terminal device may search, based on the service type of the first data and the correspondence, for the CBR threshold corresponding to the first data, to further determine the transmission requirement of the first data.

Optionally, that a terminal device obtains a transmission requirement of first data includes: The terminal device receives indication information from the network device, where the indication information is used to indicate whether the first resource meets the requirement of the first data.

The terminal device may directly obtain, from the network device, the indication information indicating whether the first data can be transmitted by using the first resource, and does not need to measure the transmission characteristic of the first resource. Therefore, the transmission delay can be reduced while the requirement of the V2X communications system on the data transmission reliability is met.

Optionally, the sending request information to a network device includes: when a transmission feature of the second resource meets the transmission requirement of the first data, sending the request information to the network device.

The second resource is, for example, a resource with relatively high reliability configured by using a broadcast message or dedicated signaling. Before sending the request information to the network device, the terminal device may determine whether reliability of the second resource meets the reliability requirement of the first data. When the reliability of the second resource meets the reliability requirement of the first data, the terminal device sends the request information to the network device. When the reliability of the second resource does not meet the reliability requirement of the first data, the terminal device does not need to send the request information to the network device, thereby avoiding a waste of air interface resources.

Optionally, the first data includes at least two data packets. That a terminal device obtains a transmission requirement of first data includes: The terminal device obtains a transmission requirement of a data packet with a highest transmission requirement in the at least two data packets as the transmission requirement of the first data.

When a plurality of data packets need to be encapsulated into a same data packet for sending, this solution can ensure that a transmission requirement of each data packet can be met.

Optionally, the method further includes: sending identification information to the network device, where the identification information is used to indicate the second resource.

For example, the terminal device may determine, based on a reference signal received power, that the reliability of the second resource meets the requirement. Therefore, the terminal device may send the identification information of the second resource to the network device, so that the network device determines the reliability of the second resource based on the identification information, and the network device does not need to measure the reliability of the second resource, thereby reducing load of the network device.

The request information is carried in a message 3 (message 3, MSG 3).

The terminal device requests, in a random access process by using an MSG 3, the network device to configure the second resource, where the MSG 3 carries the request information.

Optionally, the method further includes: determining a transmission requirement of second data, where the second data is sidelink data; and sending the second data by using the first resource, where the transmission feature of the first resource meets the transmission requirement of the second data.

When requesting the network device to configure the second resource, the terminal device may also transmit the second data by using the first resource. The reliability of the first resource meets a reliability requirement of the second data. In this way, sidelink data with a relatively low reliability requirement does not need to be transmitted by using a resource with relatively high reliability, thereby avoiding a waste of resources.

According to a second aspect, this application provides a sidelink transmission resource configuration apparatus. The apparatus may be a communications device (for example, a terminal device), or may be a chip in a communications device. The apparatus may include a processing unit and a transceiver unit. When the apparatus is a communications device, the processing unit may be a processor, and the transceiver unit may be a transceiver. The communications device may further include a storage unit, and the storage unit may be a memory. The storage unit is configured to store an instruction, and the processing unit is configured to execute the instruction stored in the storage unit, so that the communications device performs the method according to any one of the first aspect or the optional implementations of the first aspect. When the apparatus is a chip in a communications device, the processing unit may be a processor, and the transceiver unit may be an input/output interface, a pin, a circuit, or the like. The processing unit is configured to execute an instruction stored in a storage unit, so that the communications device performs the method according to any one of the first aspect or the optional implementations of the first aspect. The storage unit may be a storage unit (such as a register or a cache) inside the chip, or may be a storage unit (such as a read-only memory or a random access memory) that is in the communications device and that is located outside the chip.

According to a third aspect, this application provides another sidelink transmission resource configuration apparatus. The apparatus may implement functions corresponding to the steps in the method in the first aspect, and the functions may be implemented by hardware, or may be implemented by hardware executing corresponding software. The hardware or the software includes one or more units or modules corresponding to the foregoing functions.

In a possible design, the apparatus includes a processor. The processor is configured to support the apparatus in performing the corresponding functions in the method according to the first aspect. The apparatus may further include a memory. The memory is configured to couple to the processor, and the memory stores a program instruction and data that are necessary for the apparatus. Optionally, the apparatus further includes a communications interface. The communications interface is configured to support communication between the apparatus and another network element.

According to a fourth aspect, this application provides a computer program product. The computer program product includes computer program code. When the computer program code is run by a communications unit and a processing unit, or a transceiver and a processor of a terminal device, the terminal device is enabled to perform the method according to the first aspect.

According to a fifth aspect, this application provides a computer storage medium, configured to store a computer software instruction used by the foregoing terminal device. The computer storage medium contains a program designed for performing the method according to the first aspect.

According to a sixth aspect, this application further provides a communications system. The communications system includes the sidelink transmission resource configuration apparatus according to the second aspect or the third aspect. The communications system further includes a network device that communicates with the sidelink transmission resource configuration apparatus.

### BRIEF DESCRIPTION OF DRAWINGS

FIG. 1 is a schematic diagram of a V2X communications system;
FIG. 2 is a schematic block diagram of a communications system to which this application is applicable;
FIG. 3 is a schematic flowchart of a sidelink resource configuration method according to this application;
FIG. 4 is a schematic flowchart of a method for determining a sidelink resource based on a random access process according to this application;
FIG. 5 is a schematic diagram of a sidelink resource configuration apparatus according to this application;
FIG. 6 is a schematic diagram of a terminal device according to this application; and
FIG. 7 is a schematic diagram of another sidelink resource configuration apparatus according to this application.

### DESCRIPTION OF EMBODIMENTS

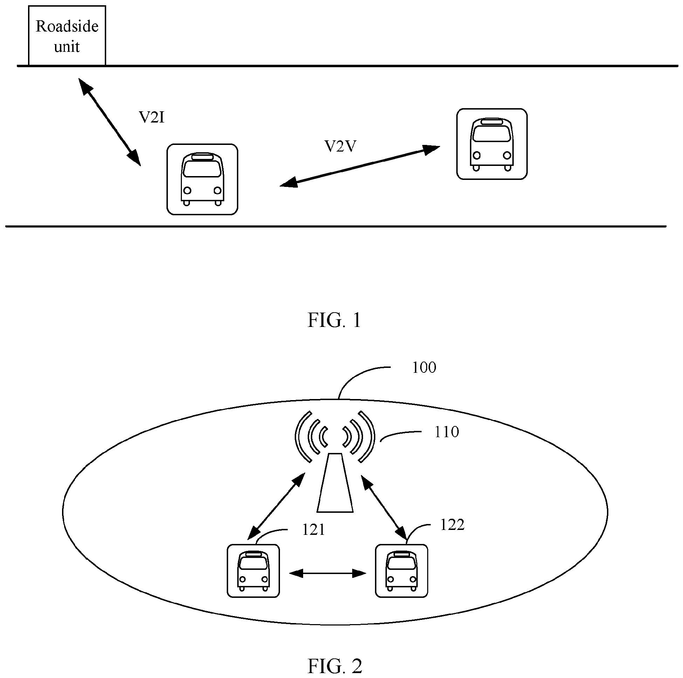

Currently, a vehicle may obtain road condition information or receive an information service in a timely manner through vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like. These communication modes may be collectively referred to as V2X communication. The most common V2V communication and the V2I communication are used as an example. FIG. 1 is a schematic diagram of the V2V communication and the V2I communication. As shown in FIG. 1, a vehicle may broadcast, through the V2V communication, information about the vehicle such as a driving speed, a driving direction, a specific location, and whether emergence braking is performed to a nearby vehicle, so that a driver of the nearby vehicle can obtain the information to better learn of a traffic condition outside a line of sight, to predict a danger and further avoid the danger. In the V2I communication, in addition to exchange of the foregoing security information, a roadside infrastructure such as a roadside unit (road side unit, RSU) may provide various types of service information and data network access for the vehicle. Functions such as electronic toll collection and in-vehicle entertainment can greatly improve transportation intelligence.

A long term evolution (long term evolution, LTE) system is a current mainstream wireless communications technology.

A related standard about a service feature and a transmission requirement of V2X communication is formulated in the system, to support LTE-based V2X communication. In the LTE system-based V2X communication, sidelink communication is a main communication mode. In the sidelink communication, data transmission between terminal devices may be performed without forwarding by a network device. The sidelink communication mainly includes two transmission modes: a centralized scheduling transmission mode (which may also be referred to as mode 3) and a distributed transmission mode (which may also be referred to as mode 4). The following briefly describes the two transmission modes:
The centralized scheduling transmission mode (which may also be referred to as mode 3): In this mode, each time before sending data, the terminal device needs to apply to the network device for a resource, and sends V2X service data based on the resource allocated by the network device. Because resources of the terminal device are uniformly allocated by the network device, a case in which a same resource is allocated to a neighboring terminal device does not occur. In this way, the centralized transmission mode can ensure better transmission reliability. However, signaling needs to be exchanged between the terminal device and the network device each time. Therefore, in comparison with the distributed transmission mode, a transmission delay of sending data in the centralized scheduling transmission mode is longer.

The distributed transmission mode (which may also be referred to as mode 4): In a scenario with network coverage, the network device configures a resource pool for the terminal device by using a SIB message or dedicated radio resource control (Dedicated RRC) signaling. When sending V2X data, the terminal device may autonomously obtain, through random selection, based on a sensing/reservation mechanism, or based on a part of the sensing/reservation mechanism, at least some resources from the resource pool, for data sending. In a scenario without network coverage, the terminal device autonomously obtains at least some resources from a resource pool in preconfigured information, for data sending. The preconfigured information may be a resource pool that is of the terminal and that is configured in the terminal before delivery, or may be information that is preconfigured by the network device and that is stored in the terminal. Because the terminal device autonomously selects a resource, a case in which different terminal devices select a same resource for data sending may occur. As a result, a transmission collision may occur. Therefore, when different terminal devices that perform communication based on the distributed transmission mode use a same resource for data sending, a transmission collision may occur, thereby reducing data transmission reliability, and affecting data transmission efficiency.

FIG. 2 is a schematic block diagram of a communications system 100 to which this application is applicable. As shown in FIG. 2, in the communications system 100, before data is transmitted, a terminal device 121 may determine, through signaling exchange with a network device 110, a resource used for transmitting the data, and then the terminal device 121 uses the determined resource to communicate with a terminal device 122. In other words, the solutions described in this application are applicable to a sidelink transmission scenario.

The terminal device 121 may be a vehicle having a communication function, or may be an in-vehicle electronic system, or may be a mobile phone, or may be a wearable electronic device, or may be another communications device that complies with a V2X protocol.

The network device 110 may be an evolved NodeB (evolved node B, eNB) in an LTE system, or may be a gNB (gNB) in a 5G communications system. The foregoing network device is merely an example for description. The network device 110 may alternatively be a relay station, an access point, or an in-vehicle device, a wearable device or another type of device.

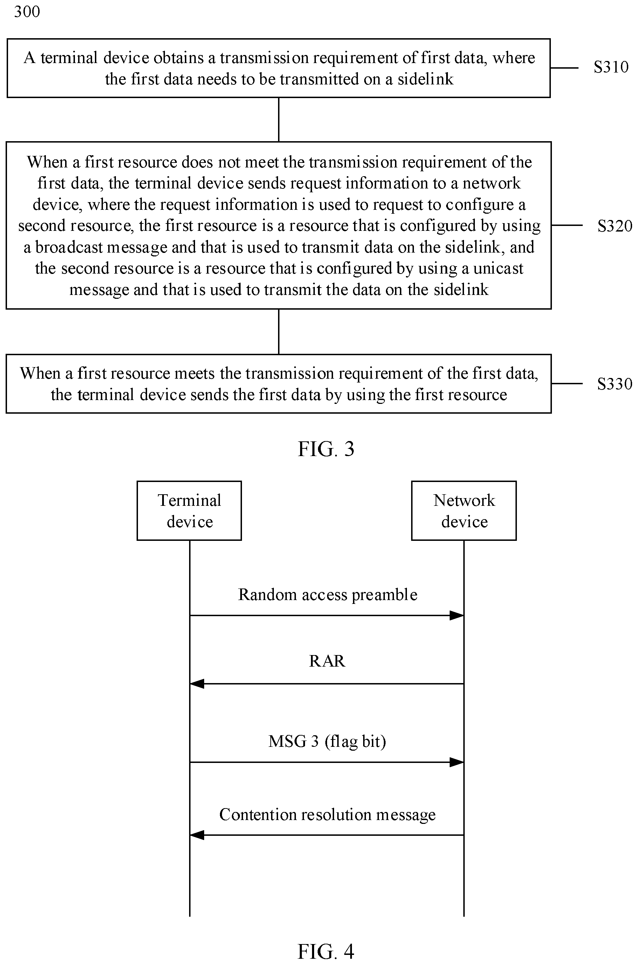

With reference to FIG. 3, the following describes in detail a sidelink transmission resource configuration method 300 provided in this application.

The method 300 shown in FIG. 3 may be performed by a terminal device, or may be performed by another device, for example, a chip. An execution device of the method 300 is not limited in this application. The method 300 includes the following steps.

S310. A terminal device obtains a transmission requirement of first data, where the first data needs to be transmitted on a sidelink.

For example, in this application, "first" is merely used for differentiation and description, and should not be understood as a limitation on the technical solutions of this application. The first data may be data that waits to be transmitted through the sidelink; in other words, the first data is to-be-sent data. The transmission requirement of the first data may be represented by quality of service (quality of service, QoS). For example, higher QoS of the first data indicates a higher reliability requirement and/or a higher delay requirement of the first data, and lower QoS of the first data indicates a lower reliability requirement and/or a lower delay requirement of the first data. Alternatively, the transmission requirement of the first data may be represented by other quality of service quantization identification information, or the transmission requirement of the first data is represented by a quality of service flow identifier (quality of service flow identifier, QFI). A QFI is used to identify a QoS flow (QoS flow). The QoS flow is a fine-grained QoS differentiation mechanism. Data of one QoS flow has a same QoS parameter. The QoS parameter includes any one or more of the following parameters:
1. Resource type (resource type): For example, the resource type may be represented by one or more of the following parameters: a guaranteed bit rate (guaranteed bit rate, GBR), a non-guaranteed bit rate (non-GBR), and a low-delay guaranteed bit rate (delay guaranteed GBR), where the GBR is used to indicate a guaranteed transmission resource of a QoS flow. The resource type is used to determine whether a guaranteed flow bit rate (GFBR) value of a QoS flow level associated with a dedicated network resource is permanently allocated.
2. Priority (priority level): For example, the priority may be used to indicate a scheduling priority between different QoS flows. A QoS flow with a higher priority is preferentially scheduled. A priority associated with a 5G QoS feature is used to indicate a priority of scheduling a resource in QoS flows.
3. Packet delay budget (packet delay budget, PDB): For example, the PDB defines an upper limit of a delay of a data packet between UE and a user plane function (user plane function, UPF) entity.
4. Packet loss rate (packet error rate, PER): For example, the PER defines an upper limit of a packet loss rate of a protocol data unit (protocol data unit, PDU) (for example, an IP data packet), and the PDU may be a data packet that has been sent by a sender but has not been successfully received by a receiver.
5. Averaging window (averaging window): For example, the averaging window may be defined only for a GBR QoS flow. The averaging window represents duration in which a guaranteed flow bit rate (guaranteed flow bit rate, GFBR) and a maximum flow bit rate (maximum flow bit rate, MFBR) are to be calculated.
6. Maximum data burst volume (maximum data burst volume, MDBV): For example, the MDBV may be used only for a low-delay GBR resource type. The MDBV represents a maximum volume of data that needs to be served by a 5G access network (5G-AN) within a 5G-AN PDB (namely, a 5G-AN part of the PDB).

Optionally, a packet priority (prose per-packet priority, PPPP) may also be used to indicate the delay requirement of the first data, and packet reliability (prose per-packet reliability, PPPR) may be used to indicate the reliability requirement of the first data. This is not limited in this application.

S320. When a first resource does not meet the transmission requirement of the first data, the terminal device sends request information to a network device, where the request information is used to request to configure a second resource, the first resource is a resource that is configured by using a broadcast message and that is used to transmit data on the sidelink, and the second resource is a resource that is configured by using a unicast message and that is used to transmit data on the sidelink.

Optionally, S320 may alternatively be replaced with: When a first resource does not meet the transmission requirement of the first data, the terminal device sends request information to a network device, where the request information is used to request to configure a second resource, the first resource is a resource that is configured by using a unicast message and that is used to transmit data on the sidelink, and the second resource is a resource that is configured by using a broadcast message and that is used to transmit data on the sidelink.

S330. When a first resource meets the transmission requirement of the first data, the terminal device sends the first data by using the first resource.

For example, a transmission feature may be used to indicate a transmission capability of a transmission resource (which may also be referred to as a "resource" for short). That "a first resource does not meet the transmission requirement of the first data" represents that "a transmission feature of the first resource does not meet the transmission requirement of the first data". Correspondingly, that "a first resource meets the transmission requirement of the first data" represents that "a transmission feature of the first resource meets the transmission requirement of the first data". For example, when the transmission feature is reliability, the terminal device determines a reliability assurance degree of a transmission resource. A resource with relatively good reliability assurance can transmit data with a relatively high reliability requirement, and a resource with relatively poor reliability assurance cannot transmit data with a relatively high reliability requirement. The transmission feature may alternatively be a delay feature. The terminal device determines a low-delay assurance degree of a transmission resource. A resource with a relatively high low-delay assurance degree can transmit data with a relatively high delay requirement, and a resource with a relatively poor low-delay assurance degree cannot transmit data with a relatively high delay requirement.

The foregoing explanation of the transmission feature is merely an example for description. The transmission feature may alternatively be another property used to indicate a transmission capability of a transmission resource. In addition, the transmission feature may be a property. For example, the transmission feature is reliability or a delay feature. The transmission feature may alternatively be a set of a plurality of properties. For example, the transmission feature is reliability (for example, a packet loss rate) and a delay feature. For brevity, the following describes the technical solutions provided in this application by using an example in which the transmission feature is reliability.

In this application, a resource may be at least one resource pool (resource pool) of a carrier (carrier). One carrier may include at least one resource pool, and one resource pool includes a plurality of sub-channels (sub-channel). Each resource pool corresponds to one geographic region, and one geographic region may correspond to one or more resource pools.

A channel busy ratio (channel busy ratio, CBR) may be used to indicate reliability of a resource. A resource pool may be used as an example; in this case, the CBR may be defined as a ratio of a quantity of available sub-channels to a quantity of all sub-channels in the resource pool. An available sub-channel may be determined in the following manner: The terminal device measures a sub-channel. If a measurement value meets a preset threshold, it indicates that the sub-channel is available. If a measurement value does not meet a preset threshold, it indicates that the sub-channel is unavailable. The foregoing measurement value is, for example, a value of a received signal strength indicator (received signal strength indicator, RSSI), or a value of a reference signal received power (reference signal received power, RSRP). For example, if an RSRP of a sub-channel is greater than a preset threshold or an RSSI of a sub-channel is less than a preset threshold, it indicates that the sub-channel is available. If an RSRP of a sub-channel is less than a preset threshold or an RSSI of a sub-channel is greater than a preset threshold, it indicates that the sub-channel is unavailable.

For example, a larger value of a CBR indicates a resource pool with a higher usage, that is, lower reliability of a resource. A smaller value of a CBR indicates a resource pool with a lower usage, that is, higher reliability of a resource. Optionally, when a CBR is greater than or equal to a preset value corresponding to the transmission requirement of the first data, the terminal device determines that the transmission feature of the first resource does not meet the transmission requirement of the first data. When a CBR is less than or equal to a preset value corresponding to the transmission requirement of the first data, the terminal device determines that the transmission feature of the first resource meets the transmission requirement of the first data. After obtaining the first data, the terminal device first determines whether reliability of the first resource meets the reliability requirement of the first data. For example, when a CBR of at least one of resource pools corresponding to N (N is greater than or equal to 1) carriers of the first resource is greater than a CBR threshold of the transmission requirement of the first data, or when a CBR of at least one resource pool corresponding to a carrier specified by the network device is greater than a CBR threshold of the transmission requirement of the first data, the terminal device determines that the reliability of the first resource does not meet the reliability requirement of the first data, where the carrier specified by the network device is one or more of N carriers of the first resource, and the at least one resource pool corresponds to a same geographic region. Then, the terminal device sends the request information to the network device, to request the network device to configure a resource (namely, the second resource) that meets the reliability requirement of the first data. Therefore, the first data may be sent on the second resource, to meet a requirement of a V2X communications system on data transmission reliability.

Optionally, when determining that reliability of the first resource meets the reliability requirement of the first data, the terminal device may directly send the first data by using the first resource, and does not need to request the network device to configure the second resource. Therefore, a transmission delay of the first data can be reduced while a requirement of a V2X communications system on data transmission reliability is met.

Optionally, in the method 300, the first resource may be a contention resource (for example, a mode 4 resource); the second resource may be a contention resource (for example, a mode 4 resource), or may be a contention-free resource (for example, a mode 3 resource); or the first resource and the second resource may be other transmission resources. This is not limited in this application. When both the first resource and the second resource are mode 4 resources, the first resource is a mode 4 resource with relatively low reliability, and the second resource is a mode 4 resource with relatively high reliability. For example, the first resource is a mode 4 resource that can be used by all terminal devices, while the second resource is a mode 4 resource that can be used by a specific type of terminal device.

For example, S310 includes: The terminal device obtains configuration information from the network device, where the configuration information is used to configure a correspondence between a service type of data and a CBR threshold; and the terminal device determines, based on the correspondence and a service type of the first data, a CBR threshold corresponding to the first data, where the CBR threshold corresponding to the first data is the transmission requirement of the first data.

Optionally, the method 300 may further include:
when a CBR of the first resource does not meet the CBR threshold corresponding to the first data, determining that the first resource does not meet the transmission requirement of the first data.

The service type may be determined based on service information. To be specific, that "the configuration information is used to configure a correspondence between a service type of data and a CBR threshold" may be replaced with that "the configuration information is used to configure a correspondence between service information of data and a CBR threshold". The service information may be one or more of PPPR, a PPPP and a QFI. The terminal device may obtain the correspondence between a service type of data and a CBR threshold in advance by using the configuration information. The correspondence is, for example, a table. The terminal device may search, based on the service type of the first data and the correspondence, for the CBR threshold corresponding to the first data, to further determine the transmission requirement of the first data.

It should be understood that in this application, the term "configure" may be understood as "allocate", or may be understood as "indicate". For example, that "the first resource is a resource that is configured by using a broadcast message and that is used to transmit data on the sidelink" means that a resource used to transmit data on the sidelink is allocated to the terminal device by using the broadcast message. The broadcast message may carry identification information of the resource. For another example, that "the configuration information is used to configure a correspondence between a service type of data and a CBR threshold" means that the configuration information is used to indicate that the correspondence between service type of data and a CBR threshold is one of preset correspondences, or the configuration information includes the correspondence between a service type of data and a CBR threshold that is a preset correspondence.

The foregoing explanation of the term "configure" is merely an example for description. Any other understanding of the term "configure" that can properly explain the solutions is applicable to this application.

Optionally, S310 includes: The terminal device receives indication information from the network device, where the indication information is used to indicate whether the first resource meets the requirement of the first data.

The terminal device may directly obtain, from the network device, the indication information indicating whether the first data can be transmitted by using the first resource, and does not need to measure the transmission characteristic of the first resource. Therefore, the transmission delay can be reduced while the requirement of the V2X communications system on the data transmission reliability is met.

Optionally, the first data includes at least two data packets. S310 includes: The terminal device obtains a transmission requirement of a data packet with a highest transmission requirement in the at least two data packets as the transmission requirement of the first data.

For example, the terminal device currently has data packets of three PPPR types: PPPR 1, PPPR 2, and PPPR 3. They are sorted in ascending order of reliability requirements as follows: PPPR 1 < PPPR 2 < PPPR 3. Each type of PPPR corresponds to a CBR threshold, and the CBR thresholds are threshold 1, threshold 2, and threshold 3. The CBR thresholds are sorted in descending order as follows: threshold 1 > threshold 2 > threshold 3, as shown in Table 1. Currently, two data packets need to be sent in a form of a protocol data unit (protocol data unit, PDU). For example, the two data packets are a first data packet and a third data packet. PPPR corresponding to the first data packet is PPPR 1, and PPPR corresponding to the third data packet is PPPR 3. If a measurement value of CBR measurement of a mode 4 resource pool of a carrier of the current first resource is A, where threshold 1 > A > threshold 3, reliability of the first data packet can be ensured, but reliability of data transmission of the third data packet on the first resource is difficult to be ensured. Therefore, a mode 3 resource needs to be requested from the network device, to send the first data packet and the third data packet.

**Table 1**

| PPPR | Reliability | CBR threshold |
|---|---|---|
| PPPR 1 | 90% | Threshold 1 |
| PPPR 2 | 99.9% | Threshold 2 |
| PPPR 3 | 99.999% | Threshold 3 |

In the foregoing embodiment, PPPR is used as an example to describe how to determine the transmission requirement of the first data when a plurality of data packets are sent at the same time. The transmission requirement of the first data may alternatively be determined based on another parameter when a plurality of data packets are sent at the same time.

Optionally, S320 includes: when the second resource meets the transmission requirement of the first data, sending the request information to the network device.

For example, the second resource is, for example, a resource with relatively high reliability configured by using dedicated signaling. Before sending the request information to the network device, the terminal device may determine whether reliability of the second resource meets the reliability requirement of the first data. When the reliability of the second resource meets the reliability requirement of the first data, the terminal device sends the request information to the network device. When the reliability of the second resource does not meet the reliability requirement of the first data, the terminal device does not need to send the request information to the network device, thereby avoiding a waste of air interface resources.

For example, when a CBR of at least one resource pool corresponding to at least one carrier in the second resource is less than a CBR threshold of PPPR of the first data, the request information is sent to the network device. Optionally, the method 300 further includes: sending identification information to the network device, where the identification information is used to indicate the second resource.

For example, the terminal device may determine the reliability of the second resource based on some parameters (for example, a reference signal received power). Therefore, the terminal device may send, to the network device, the identification information used to indicate the second resource, so that the network device determines an available resource (namely, the second resource) based on the identification information, and the network device does not need to measure the reliability of the second resource, thereby reducing load of the network device.

The terminal device sends, to the network device, a measurement quantity (a CBR) corresponding to a carrier or a frequency. The measurement quantity is the indication information, indicating reliability of the carrier or the frequency (namely, the second resource). In this way, the network device may directly determine, based on the indication information, whether the carrier or the frequency meets the reliability requirement of the first data, and the network device does not need to measure the reliability of the second resource, thereby reducing the load of the network device. The request information is carried in an MSG 3.

The terminal device requests, in a random access process by using an MSG 3, the network device to configure the second resource, where the MSG 3 carries the request information. Alternatively, the terminal device may request, by using a dedicated request message, the network device to configure the second resource.

FIG. 4 shows a method for requesting to configure the second resource provided in this application. The method includes the following steps:
5401. The terminal device sends an MSG 1 to the network device, where the MSG 1 is a random access preamble, to request to perform random access.
S402. The terminal device receives anMSG 2, where the MSG 2 is a random access response (random access response, RAR).
S403. The terminal device sends an MSG 3 based on the RAR, where the MSG 3 carries a flag bit, and the flag bit is used to indicate a triggering event of the random access. For example, the MSG 3 carries a sidelink buffer status report (buffer status report, BSR) used to trigger the network device to configure a second resource. Optionally, the MSG 3 may further carry an available carrier identifier (carrier ID) list or a frequency identifier (frequency ID) list. The MSG 3 further carries a measurement quantity (a CBR) corresponding to a carrier or a frequency, so that the network device configures the second resource.
S404. The terminal device receives an MSG 4, namely, a contention resolution message.

In an optional example, after the network device receives the dedicated request message, the network device allocates an uplink resource (for example, a Uu grant) to the terminal device. The uplink resource is used by the terminal device to send the sidelink buffer status report (buffer status report, BSR) or a scheduling request (scheduling request, SR). The network device may determine, based on the BSR or the SR, a service type and a data volume of to-be-sent data of the terminal device, to allocate, to the terminal device, a sidelink resource corresponding to the service type and the data volume of the to-be-sent data, namely, the second resource.

Optionally, the method 300 further includes:
determining a transmission requirement of second data, where the second data is sidelink data; and
sending the second data by using the first resource, where the first resource meets the transmission requirement of the second data.

For example, the second data is sidelink data different from the first data. When requesting the network device to configure the second resource, the terminal device may also transmit the second data by using the first resource. In other words, when transmitting the second data by using the first resource, the network device may also request the network device to configure the second resource. The reliability of the first resource meets a reliability requirement of the second data. In this way, sidelink data with a relatively low reliability requirement does not need to be transmitted by using a resource with relatively high reliability, thereby avoiding a waste of resources.

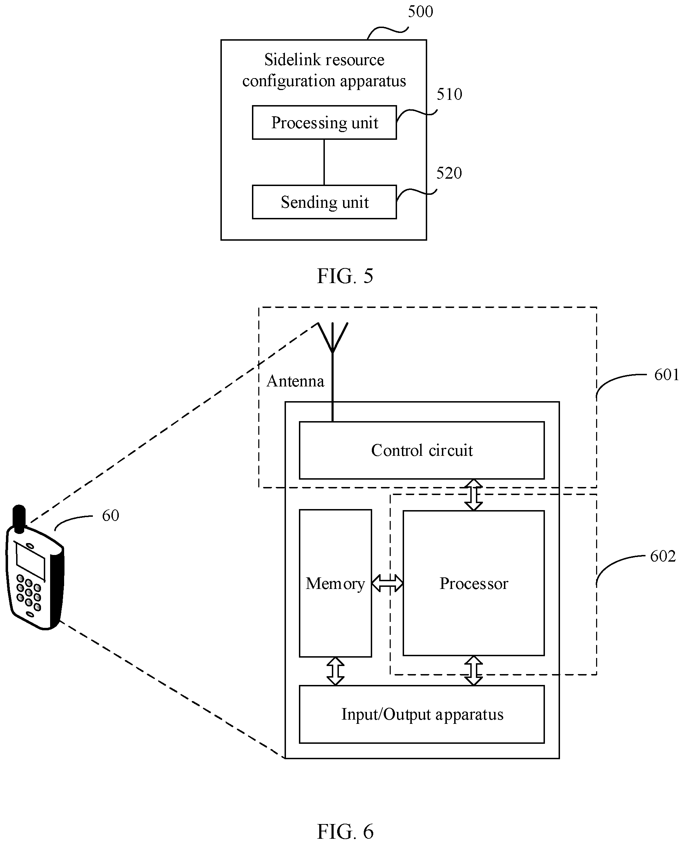

The foregoing describes in detail an example of the sidelink transmission resource configuration method provided in this application. It may be understood that, to implement the foregoing function, a sidelink transmission resource configuration apparatus includes a corresponding hardware structure and/or software module for performing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. FIG. 5 is a schematic structural diagram of a sidelink transmission resource configuration apparatus 500 provided in this application. The apparatus 500 includes a processing unit 510 and a sending unit 520. The processing unit 510 controls the sending unit 520 to perform sending steps in the method 300.

The processing unit 510 is configured to obtain a transmission requirement of first data, where the first data needs to be transmitted on a sidelink.

The sending unit 520 is configured to: when a first resource does not meet the transmission requirement of the first data, send request information to a network device, where the request information is used to request to configure a second resource, the first resource is a resource that is configured by using a broadcast message and that is used to transmit data on the sidelink, and the second resource is a resource that is configured by using a unicast message and that is used to transmit data on the sidelink; or
when a first resource meets the transmission requirement of the first data, send the first data by using the first resource.

Optionally, the apparatus 500 further includes a receiving unit. The processing unit 510 is configured to receive configuration information from the network device by using the receiving unit, where the configuration information includes service type information of the first data and a channel busy ratio CBR threshold corresponding to the service type information, and the service type information and the CBR threshold are used to indicate the transmission requirement of the first data.

Optionally, the processing unit 510 is configured to receive indication information from the network device by using the receiving unit, where the indication information is used to indicate whether the first resource meets the requirement of the first data.

Optionally, the sending unit 520 is configured to: when a transmission feature of the second resource meets the transmission requirement of the first data, send the request information to the network device.

Optionally, the processing unit 510 is configured to determine a transmission requirement of data with a highest transmission requirement in at least two pieces of data as the transmission requirement of the first data, where the at least two pieces of data include the first data, and the at least two pieces of data are data in a same data packet. Optionally, the sending unit 520 is further configured to send identification information to the network device, where the identification information is used to identify the second resource.

Optionally, the request information is carried in a message 3; or the request information is carried in a request message, and the request message is used to request to configure the second resource.

Optionally, the processing unit 510 is further configured to determine a transmission requirement of second data, where the second data is sidelink data.

The sending unit 520 is further configured to send the second data by using the first resource, where a transmission feature of the first resource meets the transmission requirement of the second data.

It should be understood that division into the units of the apparatus 500 is merely function division, and there may be other division in an actual implementation.

It may be clearly learned by a person skilled in the art that, for specific working processes of the apparatus and the units described above and for technical effects achieved by performing the steps, refer to descriptions in the foregoing method embodiments. For brevity, details are not described herein again.

The sidelink transmission resource configuration apparatus may be a chip. The processing unit may be implemented by using hardware, or may be implemented by using software. When the processing unit is implemented by using hardware, the processing unit may be a logic circuit, an integrated circuit, or the like. When the processing unit is implemented by using software, the processing unit may be a general-purpose processor, and is implemented by reading software code stored in a storage unit. The storage unit may be integrated into the processor, or may be located outside the processor and exist independently.

The following further describes, by using an example in which the apparatus 500 is a terminal device, the sidelink transmission resource configuration apparatus provided in this application.

FIG. 6 is a schematic structural diagram of a terminal device according to this application. The terminal device may be used in the communications system shown in FIG. 2, and performs the steps in the foregoing method 300. For ease of description, FIG. 6 shows only main components of the terminal device. As shown in FIG. 6, the terminal device 60 includes a processor, a memory, a control circuit, an antenna, and an input/output apparatus. The processor is mainly configured to process a communications protocol and communications data, control the entire terminal device, execute a software program, and process data of the software program, for example, configured to support the terminal device in performing the actions described in the foregoing method embodiments, for example, determining a transmission requirement of first data. The memory is mainly configured to store a software program and data, for example, store the first data described in the foregoing embodiments. The control circuit is mainly configured to: perform conversion between a baseband signal and a radio frequency signal, and process the radio frequency signal. A combination of the control circuit and the antenna may also be referred to as a transceiver that is mainly configured to transmit and receive a radio frequency signal in a form of an electromagnetic wave. The input/output apparatus, such as a touchscreen, a display screen, and a keyboard, is mainly configured to receive data input by a user and output data to the user.

After the terminal device is powered on, the processor may read a software program in the memory, explain and execute an instruction of the software program, and process data of the software program. When data needs to be sent in a wireless manner, the processor performs baseband processing on the to-be-sent data, and then outputs a baseband signal to a radio frequency circuit. After performing radio frequency processing on the baseband signal, the radio frequency circuit sends a radio frequency signal out in an electromagnetic wave form by using the antenna. When data is sent to the terminal device, the radio frequency circuit receives a radio frequency signal by using the antenna, converts the radio frequency signal into a baseband signal, and outputs the baseband signal to the processor. The processor converts the baseband signal into data, and processes the data.

A person skilled in the art may understand that for ease of description, FIG. 6 shows only one memory and only one processor. In an actual terminal device, there may be a plurality of processors and a plurality of memories. The memory may also be referred to as a storage medium, a storage device, or the like. This is not limited in this application.

In an optional implementation, the processor may include a baseband processor and/or a central processing unit. The baseband processor is mainly configured to process the communications protocol and the communications data. The central processing unit is mainly configured to: control the entire terminal device, execute the software program, and process the data of the software program. Functions of the baseband processor and the central processing unit may be integrated into the processor in FIG. 6. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to improve a processing capability of the terminal device, and parts of the terminal device may be connected through various buses. The baseband processor may also be expressed as a baseband processing circuit or a baseband processing chip. The central processing unit may also be expressed as a central processing circuit or a central processing chip. The function of processing the communications protocol and the communications data may be embedded in the processor, or may be stored in the memory in a form of a software program. The processor executes the software program to implement a baseband processing function.

In this embodiment of this application, an antenna and a control circuit that have a transceiver function may be considered as a transceiver unit 601 of the terminal device 60. For example, the transceiver unit 601 is configured to support the terminal device in performing the receiving function and sending function described in the method 300. A processor having a processing function is considered as a processing unit 602 of the terminal device 60. As shown in FIG. 6, the terminal device 60 includes the transceiver unit 601 and the processing unit 602. The transceiver unit may also be referred to as a transceiver, a transceiver apparatus, or the like. Optionally, a device configured to implement the receiving function in the transceiver unit 601 may be considered as a receiving unit. A device configured to implement the sending function in the transceiver unit 601 may be considered as a sending unit. In other words, the transceiver unit 601 includes the receiving unit and the sending unit. The receiving unit may also be referred to as a receiver, an input port, a receiving circuit, or the like. The sending unit may be referred to as a transmitter, a transmitting circuit, or the like. For example, the transceiver unit 601 may not include an antenna, but includes only a circuit, and the antenna is disposed outside the transceiver unit.

The processing unit 602 may be configured to execute an instruction stored in the memory, to control the transceiver unit 601 to receive a signal and/or send a signal, to complete a function of the terminal device in the foregoing method embodiments. In an implementation, it may be considered that a function of the transceiver unit 601 is implemented by using a transceiver circuit or a transceiver-dedicated chip. When receiving and sending various types of signals, for example, receiving a first code block, the transceiver unit 601 is controlled by the processor 602 to implement the receiving. Therefore, the processor 602 is a decider of sending or receiving a signal, and initiates a data sending or receiving operation. The transceiver unit 601 is an executor of sending or receiving the signal.

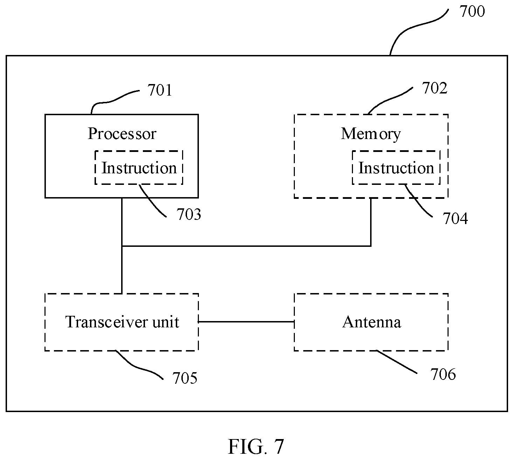

FIG. 7 is a schematic structural diagram of a communications apparatus 700. The apparatus 700 may be configured to perform the steps of the method described in the foregoing method embodiments. For details, refer to the descriptions in the foregoing method embodiments. The communications apparatus 700 may be a chip, an access network device (for example, a base station), a terminal device, another communications device, or the like.

The communications apparatus 700 includes one or more processors 701. The processor 701 may be a general-purpose processor, a dedicated processor, or the like. For example, the processor 701 may be a baseband processor or a central processing unit. The baseband processor may be configured to process a communications protocol and communications data. The central processing unit may be configured to: control the communications apparatus (for example, a base station, a terminal, or a chip), execute a software program, and process data of the software program.

The communications apparatus may include a transceiver unit that is configured to implement input (receiving) and output (sending) of a signal. For example, the communications apparatus may be a chip, and the transceiver unit may be an input and/or output circuit or a communications interface of the chip. The chip may be used in a terminal, a base station, or another communications device. For another example, the communications apparatus may be a terminal, a base station, or another communications device, and the transceiver unit may be a transceiver, a radio frequency chip, or the like.

The communications apparatus 700 includes one or more processors 701, and the one or more processors 701 may implement a function of an execution device in the method shown in FIG. 3 and/or the method shown in FIG. 5. Optionally, in addition to implementing the function of the execution device in the method shown in FIG. 3, the processor 701 may further implement another function.

Optionally, in a design, the processor 701 may execute instructions, to enable the communications apparatus 700 to perform the steps described in the foregoing method embodiments. All or some of the instructions may be stored in the processor, for example, an instruction 703, or all or some of the instructions may be stored in a memory 702 coupled to the processor, for example, an instruction 704. Alternatively, the communications apparatus 700 may be enabled, by both the instruction 703 and the instruction 704, to perform the steps described in the foregoing method embodiments.

In another possible design, the communications apparatus 700 may alternatively include a circuit. The circuit may implement a function of the network device or the terminal device in the foregoing method embodiments.

In still another possible design, the communications apparatus 700 may include one or more memories 702. The memory stores the instruction 704, and the instruction may be run on the processor, to enable the communications apparatus 700 to perform the method described in the foregoing method embodiments. Optionally, the memory may further store data. Optionally, the processor may also store an instruction and/or data. For example, the one or more memories 702 may store the correspondence described in the foregoing embodiments, the related parameter, the table, or the like in the foregoing embodiments. The processor and the memory may be separately disposed, or may be integrated together.

In still another possible design, the communications apparatus 700 may further include a transceiver unit 705 and an antenna 706. The processor 701 may be referred to as a processing unit, and controls the communications apparatus (the terminal or the base station). The transceiver unit 705 may be referred to as a transceiver, a transceiver circuit, or the like, and is configured to implement a transceiver function of the communications apparatus by using the antenna 706.

This application further provides a communications system. The communications system includes the foregoing one or more access network devices and one or more terminal devices.

It should be noted that the processor in the embodiments of this application may be an integrated circuit chip, and has a signal processing capability. In an implementation process, the steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logical device, a discrete gate or transistor logic device, or a discrete hardware component. It may implement or perform the methods, the steps, and the logical block diagrams that are disclosed in the embodiments of this application. The general-purpose processor may be a microprocessor, or the processor may be any conventional processor or the like. The steps in the methods disclosed with reference to the embodiments of this application may be directly executed and accomplished by using a hardware decoding processor, or may be executed and accomplished by using a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer-readable medium. The computer-readable medium stores a computer program. When the computer program is executed by a computer, a function in any one of the foregoing method embodiments is implemented.

This application further provides a computer program product. When the computer program product is executed by a computer, a function in any one of the foregoing method embodiments is implemented.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedures or the functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

It should be understood that "an embodiment" mentioned in the entire specification means that particular features, structures, or characteristics related to the embodiment are included in at least one embodiment of this application. Therefore, the embodiments in the entire specification do not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

It should be further understood that, in this application, the terms "when" and "if' mean that a terminal device or a base station may perform corresponding processing in an objective situation, and are not intended to limit time, and the terminal device or the base station is not necessarily required to have a determining action during implementation, and do not mean any other limitation.

In addition, the terms "system" and "network" may usually be used interchangeably in this specification. The term "and/or" in this specification describes only an association relationship for describing associated objects and represents that three relationships may exist. For example, A and/or B may represent the following three cases: Only A exists, both A and B exist, and only B exists.

It should be understood that in the embodiments of this application, "B corresponding to A" indicates that B is associated with A, and B may be determined based on A. However, it should further be understood that determining B based on A does not mean that B is determined based on A only, that is, B may also be determined based on A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has usually described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

With descriptions of the foregoing implementations, a person skilled in the art may clearly understand that this application may be implemented by hardware, firmware or a combination thereof. When the application is implemented by software, the foregoing functions may be stored in a computer-readable medium or transmitted as one or more instructions or code in a computer-readable medium. The computer-readable medium includes a computer storage medium and a communications medium, where the communications medium includes any medium that enables a computer program to be transmitted from one place to another place. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by the computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave all fall within the definition of the medium. For example, a disk (disk) and a disc (disc) used in this application includes a compact disc (CD), a laser disc, an optical disc, a digital versatile disc (DVD), a floppy disk and a Blu-ray disc, where the disk usually copies data by a magnetic means, and the disc copies data by a laser means. The foregoing combination should also be included in the protection scope of the computer-readable medium.

In summary, what is described above is merely example embodiments of the technical solutions of this application, but is not intended to limit the protection scope of this application.

## Claims

1. A method applied for a terminal device (60, 121) and for sidelink transmission, comprising:
obtaining (S310) a transmission requirement of first data, wherein the first data needs to be transmitted on a sidelink; and
when a first resource does not meet the transmission requirement of the first data, sending (S320) request information to a network device (110), wherein the request information is used to request to configure a second resource, the first resource is a resource that is configured by using a broadcast message and that is used to transmit data on the sidelink, and the second resource is a resource that is configured by using a unicast message and that is used to transmit data on the sidelink,
wherein
the obtaining the transmission requirement of the first data comprises:
receiving configuration information from the network device (110), wherein the configuration information is used to configure a correspondence between a service type of data and a channel busy ratio, CBR, threshold; and
determining, based on the correspondence and a service type of the first data, a CBR threshold corresponding to the first data, wherein the CBR threshold corresponding to the first data is the transmission requirement of the first data;
the method further comprises:
when a CBR of the first resource does not meet the CBR threshold corresponding to the first data, determining that the first resource does not meet the transmission requirement of the first data, and
wherein sending request information to the network device comprises:
requesting, in a random access process by using a message 3, the network device (110) to configure the second resource, wherein
the message 3 carries the request information and the message 3 further carries a CBR corresponding to a carrier or a frequency of the second resource, so that the network device (110) is enabled to configure the second resource.

2. The method according to claim 1, wherein the sending the request information to the network device (110) comprises:
when the second resource meets the transmission requirement of the first data, sending the request information to the network device (110).

3. The method according to claim 1 or 2, wherein the first data comprises at least two data packets, and the obtaining the transmission requirement of the first data comprises:
obtaining a transmission requirement of a data packet with a highest transmission requirement in the at least two data packets as the transmission requirement of the first data.

4. The method according to any one of claims 1 to 3, wherein the method further comprises:
sending identification information to the network device (110), wherein the identification information is used to indicate the second resource.

5. The method according to any one of claims 1 to 4, wherein the method further comprises:
determining a transmission requirement of second data, wherein the second data is data transmitted on sidelink; and
sending the second data by using the first resource, wherein a transmission feature of the first resource meets the transmission requirement of the second data.

6. An apparatus (60, 121), configured to perform the method according to any one of the claims 1 to 5.

7. A computer-readable storage medium storing computer instructions, that when executed by one or more processors (602), cause the one or more processors to perform the method according to any one of claims 1 to 5.

8. A computer program product comprising an instruction, wherein when the instruction is executed by one or more processors (602), cause the one or more processors to perform the method according to any one of claims 1 to 5.

9. A communication system (100), comprising: the apparatus (60, 121) according to claim 6.

## Patentansprüche

1. Verfahren, das für ein Endgerät (60, 121) und zur Sidelink-Übertragung angewandt wird, das umfasst:
Erhalten (S310) einer Übertragungsanforderung erster Daten, wobei die ersten Daten auf einem Sidelink übertragen werden müssen; und
wenn eine erste Ressource die Übertragungsanforderung der ersten Daten nicht erfüllt, Senden (S320) von Anforderungsinformationen an ein Netzwerkgerät (110), wobei die Anforderungsinformationen verwendet werden, um anzufordern, eine zweite Ressource zu konfigurieren, wobei die erste Ressource eine Ressource ist, die unter Verwendung einer Broadcast-Nachricht konfiguriert ist und zum Übertragen von Daten auf dem Sidelink verwendet wird, und die zweite Ressource eine Ressource ist, die unter Verwendung einer Unicast-Nachricht konfiguriert ist und zum Übertragen von Daten auf dem Sidelink verwendet wird,
wobei
das Erhalten der Übertragungsanforderung der ersten Daten umfasst:
Empfangen von Konfigurationsinformationen von dem Netzwerkgerät (110), wobei die Konfigurationsinformationen verwendet werden, um eine Entsprechung zwischen einem Diensttyp von Daten und einem Kanalbelegungsverhältnis-Schwellenwert, CBR-Schwellenwert, zu konfigurieren; und
Bestimmen basierend auf der Entsprechung und einem Diensttyp der ersten Daten eines CBR-Schwellenwerts, der den ersten Daten entspricht, wobei der CBR-Schwellenwert, der den ersten Daten entspricht, die Übertragungsanforderung der ersten Daten ist;
das Verfahren ferner Folgendes umfasst:
wenn ein CBR der ersten Ressource den CBR-Schwellenwert, der den ersten Daten entspricht, nicht erfüllt, Bestimmen, dass die erste Ressource die Übertragungsanforderung der ersten Daten nicht erfüllt, und
wobei das Senden von Anforderungsinformationen an das Netzwerkgerät Folgendes umfasst:
Anfordern in einem Direktzugriffsprozess unter Verwendung einer Nachricht 3, dass das Netzwerkgerät (110) die zweite Ressource konfiguriert, wobei
die Nachricht 3 die Anforderungsinformationen trägt, und die Nachricht 3 ferner ein CBR trägt, das einem Träger oder einer Frequenz der zweiten Ressource entspricht, so dass es dem Netzwerkgerät (110) ermöglicht wird, die zweite Ressource zu konfigurieren.

2. Verfahren nach Anspruch 1, wobei das Senden der Anforderungsinformationen an das Netzwerkgerät (110) umfasst:
wenn die zweite Ressource die Übertragungsanforderung der ersten Daten erfüllt, Senden der Anforderungsinformationen an das Netzwerkgerät (110).

3. Verfahren nach Anspruch 1 oder 2, wobei die ersten Daten mindestens zwei Datenpakete umfassen und das Erhalten der Übertragungsanforderung der ersten Daten Folgendes umfasst:
Erhalten einer Übertragungsanforderung eines Datenpakets mit einer höchsten Übertragungsanforderung in den mindestens zwei Datenpaketen als die Übertragungsanforderung der ersten Daten.

4. Verfahren nach einem der Ansprüche 1 bis 3, wobei das Verfahren ferner Folgendes umfasst:
Senden von Identifikationsinformationen an das Netzwerkgerät (110), wobei die Identifikationsinformationen verwendet werden, um die zweite Ressource anzugeben.

5. Verfahren nach einem der Ansprüche 1 bis 4, wobei das Verfahren ferner Folgendes umfasst:
Bestimmen einer Übertragungsanforderung zweiter Daten, wobei die zweiten Daten Daten sind, die auf Sidelink übertragen werden; und
Senden der zweiten Daten unter Verwendung der ersten Ressource, wobei ein Übertragungsmerkmal der ersten Ressource die Übertragungsanforderung der zweiten Daten erfüllt.

6. Vorrichtung (60, 121), die konfiguriert ist, um das Verfahren nach einem der Ansprüche 1 bis 5 durchzuführen.

7. Computerlesbares Speichermedium, auf dem Computeranweisungen gespeichert sind, die bei Ausführung durch einen oder mehrere Prozessoren (602), den einen oder die mehreren Prozessoren veranlassen, ein Verfahren nach einem der Ansprüche 1 bis 5 durchzuführen.

8. Computer-Programmprodukt, das eine Anweisung umfasst, wobei, wenn die Anweisung durch einen oder mehrere Prozessoren (602) ausgeführt wird, der eine oder die mehreren Prozessoren veranlasst werden, ein Verfahren nach einem der Ansprüche 1 bis 5 durchzuführen.

9. Kommunikationssystem (100), umfassend: die Vorrichtung (60, 121) nach Anspruch 6.

## Revendications

1. Procédé appliqué pour un dispositif terminal (60, 121) et pour une transmission de liaison latérale, comprenant :
l'obtention (S310) d'une exigence de transmission de premières données, dans lequel les premières données doivent être transmises sur une liaison latérale ; et
lorsqu'une première ressource ne satisfait pas l'exigence de transmission des premières données, l'envoi (S320) d'informations de demande à un dispositif réseau (110), dans lequel les informations de demande sont utilisées pour demander la configuration d'une seconde ressource, la première ressource est une ressource qui est configurée en utilisant un message de diffusion et qui est utilisée pour transmettre des données sur la liaison latérale, et la seconde ressource est une ressource qui est configurée en utilisant un message monodiffusion et qui est utilisée pour transmettre des données sur la liaison latérale, dans lequel
l'obtention de l'exigence de transmission des premières données comprend :
la réception d'informations de configuration depuis le dispositif réseau (110), dans lequel les informations de configuration sont utilisées pour configurer une correspondance entre un type de service de données et un seuil de taux d'occupation de canal, CBR, ; et
la détermination, sur la base de la correspondance et d'un type de service des premières données, d'un seuil CBR correspondant aux premières données, dans lequel le seuil CBR correspondant aux premières données est l'exigence de transmission des premières données ;
le procédé comprend en outre :
lorsqu'un CBR de la première ressource ne satisfait pas le seuil CBR correspondant aux premières données, la détermination que la première ressource ne satisfait pas l'exigence de transmission des premières données, et
dans lequel l'envoi d'informations de demande au dispositif réseau comprend :
la demande, dans un processus d'accès aléatoire en utilisant un message 3, au dispositif réseau (110) de configurer la seconde ressource, dans lequel
le message 3 transporte les informations de demande et le message 3 transporte en outre un CBR correspondant à une porteuse ou à une fréquence de la seconde ressource, de sorte que le dispositif réseau (110) est autorisé à configurer la seconde ressource.

2. Procédé selon la revendication 1, dans lequel l'envoi des informations de demande au dispositif réseau (110) comprend :
lorsque la seconde ressource satisfait l'exigence de transmission des premières données, l'envoi des informations de demande au dispositif réseau (110).

3. Procédé selon la revendication 1 ou 2, dans lequel les premières données comprennent au moins deux paquets de données, et l'obtention de l'exigence de transmission des premières données comprend :
l'obtention d'une exigence de transmission d'un paquet de données avec une exigence de transmission la plus élevée dans les au moins deux paquets de données en tant qu'exigence de transmission des premières données.

4. Procédé selon l'une quelconque des revendications 1 à 3, dans lequel le procédé comprend en outre :
l'envoi d'informations d'identification au dispositif réseau (110), dans lequel les informations d'identification sont utilisées pour indiquer la seconde ressource.

5. Procédé selon l'une quelconque des revendications 1 à 4, dans lequel le procédé comprend en outre :
la détermination d'une exigence de transmission de secondes données, dans lequel les secondes données sont des données transmises sur une liaison latérale ; et
l'envoi des secondes données en utilisant la première ressource, dans lequel une caractéristique de transmission de la première ressource satisfait l'exigence de transmission des secondes données.

6. Appareil (60, 121), configuré pour mettre en œuvre le procédé selon l'une quelconque des revendications 1 à 5.

7. Support de stockage lisible par ordinateur stockant des instructions informatiques qui, lorsqu'elles sont exécutées par un ou plusieurs processeurs (602), amènent le processeur à mettre en œuvre le procédé selon l'une quelconque des revendications 1 à 5.

8. Produit de programme informatique comprenant une instruction, dans lequel lorsque l'instruction est exécutée par un ou plusieurs processeurs (602), elle amène les un ou plusieurs processeurs à mettre en œuvre le procédé selon l'une quelconque des revendications 1 à 5.

9. Système de communication (100), comprenant : l'appareil (60, 121) selon la revendication 6.
